# EUROPÄISCHE PATENTSCHRIFT

(11) **EP 2 239 214 B1**
(45) Veröffentlichungstag und Bekanntmachung des Hinweises auf die Patenterteilung: **02.12.2015**
(21) Anmeldenummer: 10450054.1
(22) Anmeldetag: 07.04.2010
(51) Int. Cl.: B65G 47/52, B65G 47/54

(54) **Umlenkvorrichtung**
Deflecting device
Dispositif de déviation

(30) Priorität: 08.04.2009 AT 5542009
(43) Veröffentlichungstag der Anmeldung: 13.10.2010
(73) Patentinhaber: Springer Maschinenfabrik AG, 9360 Friesach (AT)
(72) Erfinder: Roth, Heinz Ing., 9360 Friesach (AT)
(74) Vertreter: Gibler & Poth Patentanwälte KG

(56) Entgegenhaltungen:
- EP-A2- 0 795 497
- GB-A- 1 165 162
- JP-A- 2003 292 144

## Beschreibung

Die Erfindung betrifft eine Umlenkvorrichtung gemäß dem Oberbegriff des Patentanspruches 1.

Es ist bekannt längliche Stückgüter, beispielsweise Balken, Träger und/oder Bretter, im Quertransport zu fordern. Weiters ist bekannt längliche Stückgüter im Längstransport zu fordern. Beide Fördermethoden werden in einer Anlage oftmals hintereinander geschaltet, wobei die Stückgüter vom Längstransport in den Quertransport umzulenken bzw. vom Quertransport in den Längstransport umzulenken sind.

Dieses Umlenken kann manuell, also von Hand, durchgeführt werden indem das Stückgut von einem ersten Förderer, auf welchem das Stückgut beispielsweise im Quertransport angefordert wird, abgehoben wird und auf einen zweiten Förderer aufgelegt wird, auf welchem das Stückgut beispielsweise im Längstransport abgefördert wird. Dieses Umlenken kann auch maschinell, also mittels automatisierter Greifer, erfolgen. Nachteilig dabei ist, dass der manuelle oder maschinelle Aufwand hoch ist. Bei anderen bekannten Umlenkmethoden der Förderrichtung der länglichen Stückgüter werden die Anlage und/oder die Stückgüter belastet. Aus der EP 0 795 497 A2 ist eine Vorrichtung zum vereinzeln von Kartons und dergleichen bekannt, welche unter anderem eine Umlenkvorrichtung gemäß dem Oberbegriff des Anspruchs 1 aufweist, bei welcher die Bewegungsrichtung um 90° umgelenkt wird. Hierbei wird das Stückgut zunächst auf einen Ausrichtförderer gebracht, wobei überstehende Stückgüter über einen Abziehförderer auf einen Rückführförderer gebracht werden, welcher Rückfuhrförderer das Stückgut wieder auf den Ausrichtförderer fordern. Der Ausrichtförderer weist eine Reihe von im Wesentlichen kegelstumpfförmige Führungsrollen auf, welche das Fördergut aufnehmen.

Aus der GB 1 165 162 A ist eine betätigbare Abzweigung bei einem Fördersystem bekannt, bei welchem ein Stückgut in einer ersten Stellung entlang eines Hauptpfades auf Rollen gefördert wird, und in einer zweiten Stellung durch schräg stehende Rollen auf einen abschüssigen Nebenpfad gebracht wird.

Aus der JP 2003 292144 A ist ein Rollenförderer für einen Transport in Längsrichtung bekannt, wobei der Antrieb der Rollen vorgebbar außer Eingriff gebracht werden kann. Aufgabe der Erfindung ist es daher eine Umlenkvorrichtung der eingangs genannten Art anzugeben, mit welcher die genannten Nachteile vermieden werden können und mit welcher die länglichen Stückgüter schnell, anlagenschonehd, effizient und stückgutschonend umgelenkt werden können.

Erfindungsgemäß wird dies durch die Merkmale des Patentanspruches 1 erreicht.

Dabei wird das längliche Stückgut vor der Übergabeeinrichtung im Quertransport gefördert, in welchem Quertransport die Förderrichtung normal zur Längsrichtung des länglichen Stückgutes ausgebildet ist. Die Übergabccinrichtung übernimmt das längliche Stückgut im Quertransport und übergibt das längliche Stückgut an die Beschleunigungseinrichtung, welche eine beschleunigende Wirkung auf das längliche Stückgut in Längsrichtung des Stückgutes ausübt.

Die Beschleunigungseinrichtung der Übergabeeinrichtung gewährleistet, dass die länglichen Stückgüter schnell, anlagenschonend, effizient und stückgutschonend vom Quertransport in den Längstransport umgelenkt werden können. Insbesondere können Wartungskosten, Energiekosten und CO2-Ausstoß der Übergabeeinrichtung gering gehalten werden.

Dabei kann gewährleistet sein, dass bei konstanter Drehzahl der Walzen eingangsseitig der Beschleunigungseinrichtung die Geschwindigkeitskomponente der Fördergeschwindigkeit in Längsrichtung des länglichen Stückgutes gering ist und, wenn das längliche Stückgut von der Übergabeeinrichtung weg gefördert wird, dass die Geschwindigkeitskomponente der Fördergeschwindigkeit in Längsrichtung des länglichen Stückgutes kontinuierlich zunimmt. Vorteilhaft dabei ist, dass das längliche Stückgut in der Umlenkvorrichtung in Quertransportrichtung zum länglichen Stückgut kontinuierlich abgebremst und in Längsrichtung zum länglichen Stückgut kontinuierlich beschleunigt werden kann. Vorteilhaft dabei ist, dass das längliche Stückgut kaum ruckartigen Beschleunigungen und Belastungen ausgesetzt ist, womit das längliche Stückgut bei einem hohen Durchsatz dennoch stückgutschonend und energieeffizient umgelenkt werden kann.

Die Unteransprüche, welche ebenso wie der Patentanspruch 1 gleichzeitig einen Teil der Beschreibung bilden, betreffen weitere vorteilhafte Ausgestaltungen der Erfindung.

Erfindungsgemäß ist vorgesehen, dass die Übergabeeinrichtung zur Entnahme der Stückgüter von einem Quertransporter vorgesehen ist, und dass Achsen der kegelförmigen Walzen an dem der Übergabeeinrichtung zugewandten Seite näher zu dem Ausgang als an dem der Übergabeeinrichtung abgewandten Seite angeordnet sind. Wenn auf die Walzen das längliche Stückgut hiebei im Quertransport übergeben wird, dann versetzt der quergerichtete Impuls des länglichen Stückgutes die Walzen in Rotation derart, dass die Rotation der Walzen die Beschleunigung des länglichen Stückgutes in Längsrichtung des länglichen Stückgutes bewirkt.

Die Erfindung wird unter Bezugnahme auf die beigeschlossenen Zeichnungen, in welchen lediglich eine besonders bevorzugte Ausführungsform beispielhaft in unterschiedlichen Ansichten dargestellt ist, näher beschrieben.
Fig. 1 zeigt eine Aufsicht auf die Umlenkvorrichtung einer besonders bevorzugten ersten Ausführungsform mit vorgeschaltetem Quertransporter und mit nachgeschaltetem Längstransporter; und
Fig. 2 zeigt die Umlenkvorrichtung der Fig. 1 sowie den vorgeschalteten Quertransporter in Seitenansicht.

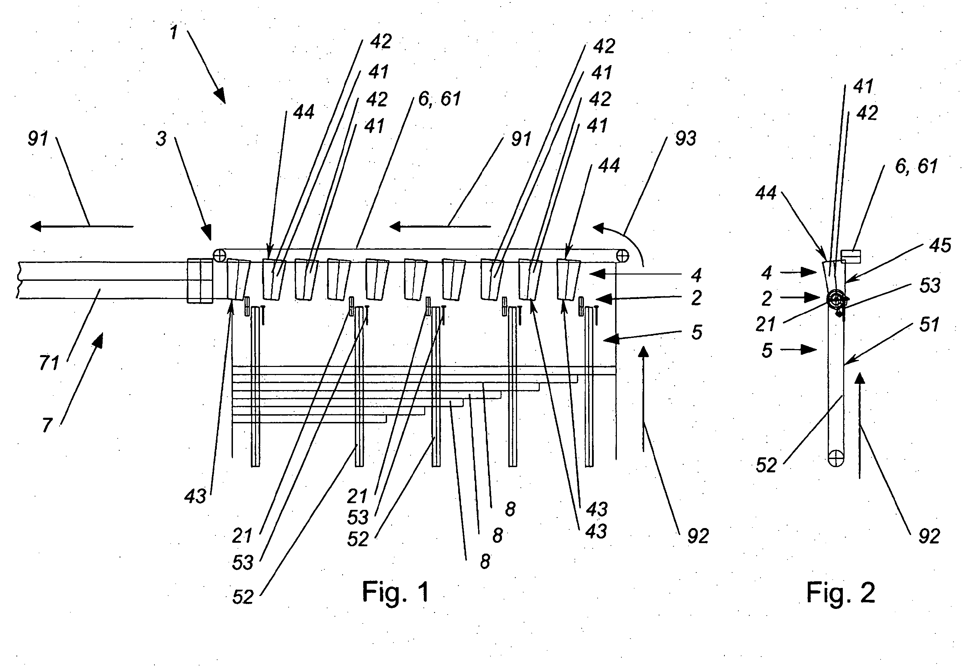

Die Fig. 1 und 2 zeigt eine Umlenkvorrichtung 1 für längliches Stückgut 8, wobei das Stückgut 8 eingangsseitig mittels einer Übergabeeinrichtung 2 im Quertransport aufgenommen wird und an einem Ausgang 3 im Längstransport abgegeben wird, wobei zur schnellen, anlagenschonenden, effizienten und stückgutschonenden Umlenkung länglicher Stückgüter 8 vorgesehen ist, dass eine Beschleunigungseinrichtung 4 zur Beschleunigung der Stückgüter 8 in Längstransportrichtung 91 im Wesentlichen kegelstumpfförmige Walzen 41 zur Aufnahme der Stückgüter 8 umfasst.

Vorteilhaft dabei ist, dass bei einer konstanten Rotationsgeschwindigkeit der Walzen 41 die Fördergeschwindigkeit in Längstransportrichtung 91 des länglichen Stückgutes 8 eingangsseitig, also im zur Übergabeeinrichtung 2 benachbarten Bereich, geringer als in einem der Übergabeeinrichtung 2 entfernt liegenden Bereich der Walzen 41 ist. Dies kann die einfache, stückgutschonende, schnelle, energieeffiziente und anlagenschonende Umlenkung der Förderrichtung des länglichen Stückgutes 8 gewährleisten. Dies gewährleistet weiters, dass das längliche Stückgut 8 im der Übergabeeinrichtung 2 zugewandten Bereich der Beschleunigungseinrichtung 4 vergleichsweise gering in Längstransportrichtung 91 beschleunigt wird bzw. mit geringer Geschwindigkeitskomponente in Längstransportrichtung 91 gefördert wird und dass das längliche Stückgut 8 im der Übergabeeinrichtung 2 entfernt angeordneten, also der Übergabeeinrichtung 2 abgewandten, Bereich der Beschleunigungseinrichtung 4 vergleichsweise stark in Längstransportrichtung 91 beschleunigt wird bzw. mit hoher Geschwindigkeitskomponente in Längstransportrichtung 91 gefördert wird.

Die Umlenkvorrichtung 1 ist für ein Verfahren zum Umlenken für längliches Stückgut vorgesehen, wobei das Stückgut 8 eingangsseitig mittels einer Übergabeeinrichtung 2 im Quertransport aufgenommen wird und an einem Ausgang 3 im Längstransport abgegeben wird und wobei vorgesehen ist, dass kegelstumpfförmige Walzen 41 der Beschleunigungseinrichtung 4 die länglichen Stückgüter 8 im Quertransport aufnehmen, in Längstransportrichtung 91 beschleunigen und an einem Ausgang 3 im Längstransport ausgeben. Die Längstransportrichtung 91 kann auch als Längsförderrichtung bezeichnet werden und verläuft parallel zur Längsrichtung des länglichen Stückgutes 8 bei dessen Förderung entlang der Umlenkvorrichtung 1. In vorteilhafter Weise bleibt die Ausrichtung des länglichen Stückgutes 8 während dessen Förderung entlang der Umlenkvorrichtung 1 konstant, wobei das längliche Stückgut 8 um eine zur Längsachse des länglichen Stückgutes 8 normal angeordnete Achse im Wesentlichen nicht verdreht wird.

Die Umlenkvorrichtung 1 kann insbesondere die Umlenkung vom Quertransport in den Längstransport des länglichen Stückgutes 8 einfach, schnell, zuverlässig, anlagenschonend und energieeffizient gewährleisten, wenn die Übergabeeinrichtung 2 zur Entnahme der Stückgüter 8 von einem Quertransporter 5 vorgesehen ist, wozu der Umlenkvorrichtung 1, insbesondere der in Fig. 1 und 2 dargestellte erste Ausführungsform der Umlenkvorrichtung 1, ein Quertransporter 5 vorgeschaltet und ein Längstransporter 7 nachgeschaltet sind.

Die Stückgüter 8 können mittels des Quertransporters 5 in vorbestimmbarer Fördergeschwindigkeit im Quertransport angefördert werden. Der Quertransporter 5 kann zur Förderung der Stückgüter 8 wenigstens zwei umlaufende erste Transporterbänder 72 umfassen.

Die Stückgüter 8 können mittels des Längstransporters 7 in vorbestimmbarer Fördergeschwindigkeit im Längstransport abgefördert werden. Der Längstransporter 7 kann zur Förderung der Stückgüter 8 wenigstens ein umlaufendes zweites Transporterband 71 umfassen.

Jede der Walzen 41 weist jeweils eine der Übergabeeinrichtung 2 zugewandte Seite 43 und eine der Übergabeeinrichtung 2 abgewandte Seite 44 auf. Die zugewandte Seite 43 der Walze 41 weist dabei einen kleineren Durchmesser als die der abgewandten Seite der Walze 41 auf. Dadurch ist gewährleistet, dass, bei konstanter Drehzahl der Walzen 41, eingangsseitig der Beschleunigungseinrichtung 4 die Geschwindigkeitskomponente der Fördergeschwindigkeit in Längsrichtung des länglichen Stückgutes 8 gering ist und mit zunehmendem Abstand zur Übergabeeinrichtung 2 im Wesentlichen kontinuierlich zunimmt, sodass das entlang der Beschleunigungseinrichtung 4 geförderte längliche Stückgut 8 in Querrichtung kontinuierlich abgebremst, wobei der Abstand des länglichen Stückgutes 8 zur Übergabeeinrichtung 2 kontinuierlich zunimmt, und in Längsrichtung besonders zuverlässig und besonders stückgutschonend beschleunigt werden kann.

Die Achsen 42 der kegelstumpfförmigen Walzen 41 sind an dem der Übergabeeinrichtung 2 zugewandten Seite 43 näher zu dem Ausgang 3 als an dem der Übergabeeinrichtung 2 abgewandten Seite 44 angeordnet. In Aufsicht auf die erste Förderbahn 51 des Quertransporters 5 sind die Achsen 42 dabei um einen vorbestimmbaren ersten Winkel geneigt zur Quertransportrichtung 92 angeordnet. Der erste Winkel wird im weiteren als horizontaler Neigungswinkel bezeichnet und wird in einer horizontalen Ebene zwischen der Quertransportrichtung 92 und der Achse 42 gemessen. Der horizontale Neigungswinkel beträgt in vorteilhafter Weise zwischen 5° und 30° und kann in Abhängigkeit der Geometrie der Umlenkvorrichtung 1 und/oder in Abhängigkeit der Walzengeometrie 41 und/oder in Abhängigkeit der Fördergeschwindigkeit der länglichen Stückgüter 8 bei deren Übergabeförderung in der Übergabeeinrichtung 2 gewählt werden. Besonders stückgutschonend und besonders energieeffizient hat sich ein horizontaler Neigungswinkel von in etwa 9°, also zwischen 7° und 11°, erwiesen, wie dies in Fig. 1 dargestellt ist. Wenn das längliche Stückgut 8 mit vorbestimmter erster Fördergeschwindigkeit im Quertransport in Quertransportrichtung 92 angefördert wird, weist es einen wohldefinierten ersten Impuls auf. Da in Quertransportrichtung 92 weisend, kann der erste Impuls als Querimpuls bezeichnet werden. Sobald das längliche Stückgut 8 mit den dieser Art geneigten Walzen 41 in Kontakt treten bewirkt die Haftreibung zwischen länglichem Stückgut 8 und Walzen 41, dass in Längstransportrichtung 91 Kräfte zwischen dem länglichen Stückgut 8 und den Walzen 41 austauschbar sind.

Die Walzen 41 weisen einen Kegelwinkel von 5° bis 30°, womit eine zuverlässige Arbeitsweise der Beschleunigungseinrichtung 4 gewährleistet werden kann. Besonders zuverlässige Umlenkung wurde mit einem Kegelwinkel von in etwa 15°, also zwischen 12° und 18°, erzielt. Dieser Winkel wird zwischen gegenüberliegenden Mantelbereichen des Kegelmantels gemessen.

Bei einer anderen - nicht dargestellten - vorteilhaften Weiterbildung kann vorgesehen sein, dass der horizontale Neigungswinkel der Achsen 42 in etwa dem halben Kegelwinkel entspricht. Vorteilhaft dabei ist, dass der dem Ausgang 3 zugewandte Bereich der Kegelmantelfläche normal auf die Längstransportrichtung 91 gerichtet ist, welches bei besonders langem länglichen Stückgut 8 von Vorteil sein kann.

Die Achsen 42 sind insbesondere als Rotationsachsen der Walzen 41 ausgebildet, um welche Rotationsachsen die Walzen 41 rotieren.

In vorteilhafter Weiterbildung kann vorgesehen sein, dass die Walzen 41, die Längstransportrichtung 91 und die Übergabeeinrichtung 2 derart angeordnet sind, dass das Stückgut 8 bei dessen Umlenkung im Wesentlichen entlang einer Ebene, insbesondere im Wesentlichen entlang einer horizontalen Ebene, gefördert wird.

Die Walzen 41 können aus dauerhaftem Material, beispielsweise aus Metall und/oder technischem Kunststoff gefertigt sein. Die Walzen 41 können aus Vollmaterial bestehen. In vorteilhafter Weise können die Walzen 41 als Hohlwalzen ausgebildet sein, womit Gewicht eingespart werden kann und womit die Walzen 41 energieschonend rotationsbeschleunigt werden können.

In vorteilhafter Weiterbildung kann vorgesehen sein, dass die Walzen 41 an deren Mantelfläche eine reibungserhöhende Beschichtung aufweisen, beispielsweise gummiartig beschichtet sind. Vorteilhaft dabei ist, dass die länglichen Stückgüter 8 schonend und zuverlässig gefördert werden können.

Die Walzen 41 sind antriebsfrei in der Umlenkvorrichtung 1 angeordnet oder weisen einen Freilauf auf. Beim Freilauf sind die Walzen 41 in eine Rotationsrichtung mit vorbestimmbarer Rotationsgeschwindigkeit antreibbar, können jedoch in diese Rotationsrichtung freilaufend schneller als die vorbestimmbare Rotationsgeschwindigkeit rotieren.

Die antriebsfreien Walzen 41 bzw. die Walzen 41 mit dem Freilauf können einen Teil der Rotationsenergie unmittelbar vom angeförderten länglichen Stückgut 8 übernehmen. Wenn das längliche Stückgut 8 auf die Walzen 41 im Quertransport übergeben wird, dann versetzt der in Quertransportrichtung 92 gerichtete Impuls des länglichen Stückgutes 8 die Walzen 41 derart in Rotation, dass die Rotation der Walzen 41 das längliche Stückgut 8 in Längstransportrichtung 91 des länglichen Stückgutes 8 beschleunigen. Hiebei wird der quergerichtete Impuls des länglichen Stückgutes 8, insbesondere kontinuierlich, in einen längsgerichteten Impuls des länglichen Stückgutes 8 umgewandelt, womit das längliche Stückgut 8 in Quertransportrichtung 92 kontinuierlich abgebremst und in Längstransportrichtung 91, insbesondere kontinuierlich, beschleunigt wird. Ein Gutteil der Bewegungsrichtungsumlenkung 93 kann dabei durch den ursprünglichen Impuls des angeförderten länglichen Stückgutes 8 bewirkt sein, welchen ursprünglichen Impuls das längliche Stückgut 8 in dem Moment aufweist, in dem es von der Übergabeeinrichtung 2 an die Beschleunigungseinrichtung 4 übergeben wird. Der ursprüngliche Impuls in Quertransportrichtung 92 kann teilweise auf die Walzen 41 und teilweise in einen Längsimpuls, also in einen Impuls in Längstransportrichtung 91 des länglichen Stückgutes 8, aufgeteilt werden.

In vorteilhafter Weise können die Walzen 41 reibungsarm gelagert werden, womit diese nach Abtransport eines der länglichen Stückgüter 8 nachrotieren können, womit das nächstangeförderte längliche Stückgut die Walzen nicht oder lediglich gering beschleunigen braucht. Vorteilhaft dabei ist, dass der ursprüngliche Impuls des angeförderten länglichen Stückgutes 8 zu einem Großteil in den Längsimpuls des länglichen Stückgutes 8 umgewandelt werden kann, womit die Umlenkvorrichtung 1 sowohl besonders energieeffizient als auch besonders stückgutschonend zum Umlenken des länglichen Stückgutes 8 verwendet werden kann.

In besonders vorteilhafter Weise kann vorgesehen sein, dass die Achsen 42 der kegelstumpfförmigen Walzen 41 im Wesentlichen parallel angeordnet sind, wie dies in Fig. 1 dargestellt ist.

In Weiterbildung kann in vorteilhafter Weise vorgesehen sein, dass die von den kegelförmigen Walzen 41 ausgebildete Auflageebene 45 im Wesentlichen mit der Transportebene 51 des Quertransporters 5 eine Ebene ausbildet, wie dies in Fig. 2 dargestellt ist. Hiezu ist zwischen der Transportebene 51 und den Achsen 42 ein vertikaler Neigungswinkel ausgebildet, welcher im Wesentlichen dem halben Kegelwinkel entspricht. Der vertikale Neigungswinkel wird in einer vertikalen Ebene zwischen der Achse 42 und der Transportebene 51 gemessen. Die Transportebene 51 kann insbesondere im Wesentlichen in einer horizontalen Ebene liegen. Vorteilhaft dabei ist, dass Auflageebene 45 und Transportebene 51 im Wesentlichen in einer Ebene liegen. In Quertransportrichtung 92 gesehen sind die Walzen 41 demgemäß schräg nach unten angeordnet. Die Quertransportrichtung 92 kann auch als Querförderrichtung bezeichnet werden und verläuft quer zur Längsrichtung des länglichen Stückgutes 8 bei dessen Förderung entlang der Umlenkvorrichtung 1.

In vorteilhafter Weiterbildung kann vorgesehen sein, dass die Übergabeeinrichtung 2 Übergaberäder 21 umfasst, wobei das Stückgut 8 mittels der Übergaberäder 21 von dem Quertransporter 5 zu den kegelförmigen Walzen 41 bewegbar ist. Dies kann die besonders zuverlässige Übergabe des Stückgutes 8 vom vorgeschalteten Transporter, insbesondere Quertransporter 5, zur Beschleunigungseinrichtung 4 gewährleisten. Bei der Stückgutübergabe rotieren die Übergaberäder 21 - in Längstransportrichtung 91 gesehen - im Uhrzeigersinn, sodass der obenliegende Bereich der Übergaberäder 21 das längliche Stückgut 8 in Quertransportrichtung 92 fördert.

In diesem Zusammenhang kann gemäß einer zweiten vorteilhaften Ausführungsform der Umlenkvorrichtung 1 vorgesehen sein, dass die Übergaberäder 21 zur teilweisen Beschleunigung des Stückgutes 8 in Richtung des Ausganges 3 angeordnet sind. Hiezu können die Übergaberäder 21 - in Quertransportrichtung 92 gesehen - schräg in Richtung zum Ausgang geneigt sein, womit die Übergaberäder 21 das Stückgut 8 ein Stück in Richtung Ausgang 3 befördern.

Die Walzen 41 der Beschleunigungseinrichtung 4 können bevorzugt entlang der Längstransportrichtung 91 angeordnet sein, womit die Walzen 41 entlang einer Gerade angeordnet sind.

Insbesondere kann vorgesehen sein, dass an der der Übergabeeinrichtung 2 abgewandten Seite 44 der kegelstumpfförmigen Walzen 41 eine Anschlagvorrichtung 6 angeordnet ist. Dies gewährleistet, dass das längliche Stückgut 8 nicht über die der Übergabeeinrichtung 2 abgewandte Seite 44 der Walzen 41 hinausfällt.

In diesem Zusammenhang kann vorgesehen sein, dass die Anschlagvorrichtung 6 ein in Längstransportrichtung 91 bewegbares Fördermittel 61 umfasst. Bei Anschlagen des länglichen Stückgutes 8 an der Anschlagvorrichtung 6 kann das bewegbare Fördermittel 61 die Längsförderung, als die Förderung in Längstransportrichtung 91, des Stückgutes 8 bewirken. Dabei kann stückgutschonend und anlagenschonend ein hoher Durchsatz gewährleistet werden.

In kostengünstiger und energieeffizienter Weise kann das Fördermittel 61 endlos umlaufend ausgebildet sein.

Insbesondere zur Umlenkung von länglichem Stückgut 8 mit rundem und/oder rechteckigem Querschnitt kann in vorteilhafter Weise vorgesehen sein, dass das Fördermittel 61 im Wesentlichen rechtwinkelig zur Auflageebene 45 angeordnet ist, wie dies bei der ersten Ausführungsfbrm der Umlenkvorrichtung 1 vorgesehen ist.

Bei anderen vorteilhaften Ausführungsformen kann vorgesehen sein, dass das Fördermittel 61 in einem Winkel größer 90°, insbesondere über 90° und unter 120°, zur Auflageebene 45 angeordnet ist. Ein dementsprechender Winkel hat sich insbesondere als vorteilhaft bei länglichem Stückgut 8 mit unregelmäßigem Querschnitt entlang dessen Längserstreckung sowie bei sechseckigem Querschnitt erwiesen.

Insbesondere kann die reibungserhöhende Beschichtung in Richtung des Ausgangs 3 wirkend ausgebildet sein, wobei die reibungserhöhende Beschichtung in Quertransportrichtung 92 gering wirkend und in Längstransportrichtung 91 hoch wirkend ausgebildet ist. Beispielsweise kann die reibungserhöhende Beschichtung dazu eine Rillung entlang des Mantelfläche aufweisen, welche Rillung insbesondere im Wesentlichen geradlinig zwischen der der Übergabeeinrichtung 2 zugewandten Seite 43 und der der Übergabeeinrichtung abgewandten Seite 44 der Walze 41 verlaufen kann, womit die reibungserhöhende Wirkung in Längstransportrichtung 91 stärker ausgebildet ist als in Quertransportrichtung 92. Dies kann die zuverlässige und schnelle Beschleunigung des länglichen Stückgutes 8 in Längstransportrichtung 91 gewährleisten.

Zur zuverlässigen Vereinzelung der länglichen Stückgüter 8 kann der Quertransporter 5 wenigstens zwei Blockiermittel 53 zur Blockierung der Querförderung der länglichen Stückgüter 8 über die Blockiermittel 53 hinaus umfassen. Mittels der Blockiermittel 53 kann das längliche Stückgut 8 vom Quertransporter 5, insbesondere von den ersten Förderbändern 52, abgehoben werden kann, womit die Förderung des länglichen Stückgutes 8 in Quertransportrichtung 92 zuverlässig verhindert sein kann. In diesem Zusammenhang kann jedes der Blockiermittel 53 hakenförmig ausgebildet sein, bei wenigstens zwei hakenförmige Blockiermittel 53 zum Einhaken am länglichen Stückgut 8 entlang der Längserstreckung des länglichen Stückgutes 8 vorgesehen sind.

## Patentansprüche

1. Umlenkvorrichtung (1) für längliches Stückgut (8), wobei das Stückgut (8) eingangsseitig mittels einer Übergabeeinrichtung (2) im Quertransport aufgenommen wird und an einem Ausgang (3) im Längstransport abgegeben wird, wobei eine Beschleunigungseinrichtung (4) zur Beschleunigung in Längstransportrichtung (91) im Wesentlichen kegelstumpfförmige Walzen (41) zur Aufnahme der Stückgüter (8) umfasst, wobei die Übergabeeinrichtung (2) zur Entnahme der Stückgüter (8) von einem Quertransporter (5) vorgesehen ist, wobei Achsen (42) der kegelstumpffisrmigen Walzen (41) an dem der Übergabeeinrichtung (2) zugewandten Seite (43) näher zu dem Ausgang (3) als an dem der Übergabeeinrichtung (2) abgewandten (44) Seite angeordnet sind, **dadurch gekennzeichnet,**
- **dass** die Walzen (41) antriebsfrei in der Umlenkvorrichtung (1) angeordnet sind,
- oder dass die Walzen (41) in eine Rotationsrichtung mit vorbestimmbarer Rotationsgeschwindigkeit antreibbar sind und einen Freilauf aufweisen,
wobei ein in Quertransportrichtung (92) gerichteter Impuls des länglichen Stückgutes (8) bei einer Übergabe des länglichen Stückgutes (8) im Quertransport auf die Walzen (41) die Walzen (41) derart in Rotation versetzt, dass die Rotation der Walzen (41) das längliche Stückgut (8) in die Längstransportrichtung (91) des länglichen Stückgutes (8) beschleunigen.

2. Umlenkvorrichtung nach Anspruch 1, **dadurch gekennzeichnet, dass** die Achsen (42) der kegelstumpfförmigen Walzen (41) im Wesentlichen parallel angeordnet sind.

3. Umlenkvorrichtung nach Anspruch 1 oder 2, **dadurch gekennzeichnet, dass** die von den kegelförmigen Walzen (41) ausgebildete Auflageebene (45) im Wesentlichen mit der Transportebene (51) des Quertransporters (5) eine Ebene ausbildet.

4. Umlenkvorrichtung nach Anspruch 1, 2 oder 3, **dadurch gekennzeichnet, dass** die Übergabeeinrichtung (2) Übergaberäder (21) umfasst, wobei das Stückgut (8) mittels der Übergaberäder (21) von dem Quertransporter (5) zu den kegelförmigen Walzen (41) bewegbar ist.

5. Umlenkvorrichtung nach Anspruch 4, **dadurch gekennzeichnet, dass** die Übergaberäder (21) zur teilweisen Beschleunigung des Stückgutes (8) in Richtung des Ausganges (3) angeordnet sind.

6. Umlenkvorrichtung nach einem der Ansprüche 1 bis 5, **dadurch gekennzeichnet, dass** an der der Übergabeeinrichtung (2) abgewandten Seite (44) der kegelstumpfförmigen Walzen (41) eine Anschlagvorrichtung (6) angeordnet ist.

7. Umlenkvorrichtung nach Anspruch 6, **dadurch gekennzeichnet, dass** die Anschlagvorrichtung (6) ein in Längstransportrichtung (91) bewegbares Fördermittel (61) umfasst.

8. Umlenkvorrichtung nach Anspruch 7, **dadurch gekennzeichnet, dass** das Fördermittel (61) endlos umlaufend ausgebildet ist.

9. Umlenkvorrichtung nach Anspruch 7 oder 8, **dadurch gekennzeichnet, dass** das Fördermittel (61) im Wesentlichen rechtwinkelig zur Auflageebene (45) angeordnet ist.

## Claims

1. A deflecting apparatus (1) for elongated piece goods (8), wherein the piece good (8) is accommodated on the input side by means of a transfer device (2) in transverse transport and is supplied to an output (3) in longitudinal transport, wherein an acceleration device (4) for accelerating in the longitudinal transport direction (91) comprises rollers (41) substantially shaped in the manner of a truncated cone for accommodating the piece goods (8), wherein the transfer device (2) is provided for removing the piece goods (8) from a transverse transporter (5), wherein the axes (42) of the truncated conical rollers (41) are arranged at the side (43) facing the transfer device (2) closer to the output (3) than at the side (44) facing away from the transfer device (2), **characterized in that**
- the rollers (41) are arranged in a drive-free manner in the deflecting apparatus (1),
- or the rollers (41) can be driven in a direction of rotation with a predeterminable rotational speed and are provided with freewheel,
wherein an impulse of the elongated piece good (8) directed in the transverse transport direction (92) during a transfer of the elongated piece good (8) in transverse transport to the rollers (41) makes the rollers (41) rotate in such a way that the rotation of the rollers (41) accelerate the elongated piece good (8) in the longitudinal transport direction (91) of the elongated piece good (8).

2. A deflecting apparatus according to claim 1, **characterized in that** the axes (42) of the truncated conical rollers (41) are arranged substantially parallel.

3. A deflecting apparatus according to claim 1 or 2, **characterized in that** the support plane (45) formed by the conical rollers (41) substantially forms a plane with the transport plane (51) of the transverse transporter (5).

4. A deflecting apparatus according to claim 1, 2 or 3, **characterized in that** the transfer device (2) comprises transfer wheels (21), wherein the piece good (8) can be moved by means of the transfer wheels (21) from the transverse transporter (5) to the conical rollers (41).

5. A deflecting apparatus according to claim 4, **characterized in that** the transfer wheels (21) are arranged for the partial acceleration of the piece good (8) in the direction of the output (3).

6. A deflecting apparatus according to one of the claims 1 to 5, **characterized in that** a stop apparatus (6) is arranged on the side (44) of the truncated conical rollers (41) facing away from the transfer device (2).

7. A deflecting apparatus according to claim 6, **characterized in that** the stop apparatus (6) comprises a conveying means (61) which can be moved in the longitudinal transport direction (91).

8. A deflecting apparatus according to claim 7, **characterized in that** the conveying means (61) is formed to revolve continuously.

9. A deflecting apparatus according to claim 7 or 8, **characterized in that** the conveying means (61) is arranged substantially at a right angle to the support plane (45).

## Revendications

1. Mécanisme de déviation (1) pour des produits unitaires allongés (8), lesquels produits unitaires (8) sont reçus du côté de l'entrée au moyen d'un dispositif de transfert (2) en étant transportés transversalement et déposés à une sortie (3) en étant transportés longitudinalement, dans lequel un dispositif d'accélération (4) pour l'accélération dans le sens de transport longitudinal (91) comprend des rouleaux sensiblement tronconiques (41) pour recevoir les produits unitaires (8), dans lequel le dispositif de transfert (2) est prévu pour prélever les produits unitaires (8) sur un transporteur transversal (5), des axes (42) des rouleaux tronconiques (41) étant disposés plus près de la sortie (3) sur le côté (43) orienté vers le dispositif de transfert (2) que sur le côté (44) orienté à l'opposé du dispositif de transfert (2), **caractérisé en ce que**
- les rouleaux (41) sont disposés sans entraînement dans le mécanisme de déviation (1),
- ou **en ce que** les rouleaux (41) peuvent être entraînés dans un sens de rotation à une vitesse de rotation pouvant être prédéterminée et présentent une course libre,
une impulsion dirigée dans le sens de transport transversal (92) des produits unitaires allongés (8) lors du transfert des produits unitaires allongés (8) transportés transversalement sur les rouleaux (41) provoquant la rotation des rouleaux (41) de telle façon que la rotation des rouleaux (41) accélère les produits unitaires allongés (8) dans le sens de transport longitudinal (91) des produits unitaires allongés (8).

2. Mécanisme de déviation selon la revendication 1, **caractérisé en ce que** les axes (42) des rouleaux tronconiques (41) sont disposés de façon sensiblement parallèle.

3. Mécanisme de déviation selon la revendication 1 ou 2, **caractérisé en ce que** le plan d'appui (45) formé par les rouleaux tronconiques (41) forme sensiblement un seul plan avec le plan de transport (51) du transporteur transversal (5).

4. Mécanisme de déviation selon la revendication 1, 2 ou 3, **caractérisé en ce que** le dispositif de transfert (2) comprend des roues de transfert (21), les produits unitaires (8) pouvant être déplacés au moyen des roues de transfert (21) du transporteur transversal (5) aux rouleaux tronconiques (41).

5. Mécanisme de déviation selon la revendication 4, **caractérisé en ce que** les roues de transfert (21) sont disposées en vue d'une accélération partielle des produits unitaires (8) en direction de la sortie (3).

6. Mécanisme de déviation selon l'une des revendications 1 à 5, **caractérisé en ce qu'**un mécanisme de butée (6) est prévu sur le côté (44) des rouleaux tronconiques (41) opposé au dispositif de transfert (2).

7. Mécanisme de déviation selon la revendication 6, **caractérisé en ce que** le mécanisme de butée (6) comprend un moyen de transport (61) déplaçable dans le sens de transport longitudinal (91).

8. Mécanisme de déviation selon la revendication 7, **caractérisé en ce que** le moyen de transport (61) est conçu de façon à pouvoir tourner sans fin.

9. Mécanisme de déviation selon la revendication 7 ou 8, **caractérisé en ce que** le moyen de transport (61) est disposé de façon sensiblement perpendiculaire au plan d'appui (45).
